# DEMANDE DE BREVET EUROPEEN

(11) **EP 1 271 217 A1**
(43) Date de publication de la demande: **02.01.2003**
(21) Numéro de dépôt: 02291529.2
(22) Date de dépôt: 19.06.2002
(51) Int. Cl.: G02B 25/00, G02B 7/04

(54) **Occulaire à réglage dioptrique intégré, pour tête de visée de giravion**

(30) Priorité: 21.06.2001 FR 0108167
(71) Demandeur: MBDA France, 75016 Paris (FR)
(72) Inventeur: Fontaine, Bernard, 91140 Villebon sur Yvette (FR)
(74) Mandataire: Poulin, Gérard

(57) **Abrégé**

La bague (28) de réglage dioptrique de l'oculaire (24) porte un levier de commande (52) qui fait saillie radialement entre un soufflet d'étanchéité (32) et un appui front (40). Cet agencement permet à l'utilisateur d'effectuer un réglage dioptrique de l'oculaire sans enlever l'appui front (40) et sans risquer d'endommager le soufflet (32), même lorsque ses mains sont gantées.

## Description

### Domaine technique

L'invention concerne un oculaire à réglage dioptrique intégré, destiné à être monté sur une tête de visée équipant un giravion.
L'invention s'applique notamment à un oculaire monté sur une tête de visée d'une conduite de tir d'hélicoptère.

### Etat de la technique

Il est connu d'équiper les hélicoptères militaires d'une conduite de tir comportant une tête de visée. Plus précisément, la tête de visée comprend généralement un boîtier principalement situé au-dessus du toit de la cellule de l'hélicoptère. Un bras porte oculaire, terminé par un oculaire, est monté sur le boîtier, à l'intérieur de la cellule, pour permettre à un observateur placé dans celle-ci d'observer une cible placée à l'extérieur de l'hélicoptère.

De façon plus précise, l'oculaire est muni d'une bague de réglage dioptrique, qui coopère avec une partie fixe de l'oculaire par l'intermédiaire d'un filetage à grand pas. Ainsi, la rotation de la bague de réglage permet à l'observateur d'ajuster l'oculaire à sa vue.

Dans l'état actuel de la technique, la rotation de la bague de réglage est généralement assurée manuellement, en agissant sur des cannelures usinées sur sa surface extérieure. La course de réglage complète correspond habituellement à un demi-tour de la bague.

De surcroît, un soufflet d'étanchéité est généralement placé entre la bague de réglage et la partie fixe de l'oculaire, pour assurer la protection du filetage.

En outre, un appui front en mousse englobe habituellement l'oculaire, de façon à être interposé entre ces derniers et le visage de l'observateur. La structure de l'appui front est telle qu'il recouvre presque totalement l'oculaire dans certaines positions de réglage de la bague.

Cet agencement classique soulève un certain nombre d'inconvénients, qui découlent notamment du fait que l'observateur est équipé de gants lorsqu'il manoeuvre les bagues de réglage.

Ainsi, l'espace disponible entre l'appui front et le soufflet d'étanchéité est insuffisant pour éviter que le gant de l'observateur déborde sur le soufflet lorsqu'il saisit la bague de réglage cannelée. Par conséquent, le soufflet d'étanchéité se dégrade rapidement à l'usage si aucune précaution particulière n'est prise.

Pour cette raison, certaines procédures recommandent aux utilisateurs de ne procéder aux réglages des oculaires que lorsque l'appui front est enlevé, c'est-à-dire lorsque l'hélicoptère est au sol. Toutefois, de telles procédures sont pénalisantes car les utilisateurs souhaitent pouvoir procéder à des reprises de réglage dioptrique de l'oculaire lorsque l'hélicoptère est en vol.

### Exposé de l'invention

L'invention a précisément pour objet un oculaire à réglage dioptrique intégré, pour une tête de visée d'aéronef, dont la conception originale permet d'effectuer un réglage avec une main gantée, sans dépose de l'appui front et sans risque d'endommager prématurément le soufflet d'étanchéité qui assure la protection du filetage.

Conformément à l'invention, ce résultat est obtenu au moyen d'un oculaire de tête de visée de giravion, comprenant une partie fixe munie d'un filetage, une bague de réglage dioptrique en prise sur ledit filetage, un soufflet d'étanchéité recouvrant le filetage entre un bord arrière de la bague et ladite partie fixe, et un appui front apte à recouvrir une partie avant de l'oculaire, caractérisé en ce que la bague de réglage dioptrique porte un levier de commande de rotation, qui fait saillie radialement vers l'extérieur entre le soufflet d'étanchéité et l'appui front.

Grâce à cet agencement, l'observateur peut effectuer un réglage dioptrique à l'aide de gants et sans enlever l'appui front, c'est-à-dire lorsque l'hélicoptère est en vol, en agissant directement sur le levier solidaire de la bague de réglage. Une dégradation prématurée du soufflet d'étanchéité qui protège le filetage est ainsi évitée.

Dans un premier mode de réalisation de l'invention, adapté au cas des oculaires existants dans lesquels la bague de réglage dioptrique comporte des cannelures extérieures, le levier de commande est fixé sur une bague de commande qui entoure la bague de réglage et comporte des cannelures intérieures en prise sur les cannelures extérieures de ladite bague de réglage.

Dans un deuxième mode de réalisation préféré de l'invention, qui concerne avantageusement les oculaires neufs, le levier de commande est fixé directement sur la bague de réglage dioptrique.

### Brève description des dessins

On décrira à présent, à titre d'exemple illustratif et nullement limitatif, un mode de réalisation préféré de l'invention, en se référant aux dessins annexés, dans lesquels :
- la figure 1 est une vue de côté, qui représente schématiquement la partie avant d'un hélicoptère équipé d'une tête de visée dont les oculaires sont réalisés conformément à l'invention ;
- la figure 2 est une vue en perspective éclatée d'un oculaire illustrant un mode de réalisation préféré de l'invention ;
- la figure 3 est une vue de dessus, en coupe partielle, de l'oculaire de la figure 2, la figure représentant les deux positions extrêmes du réglage dioptrique.

### Description détaillée d'un mode de réalisation préféré de l'invention

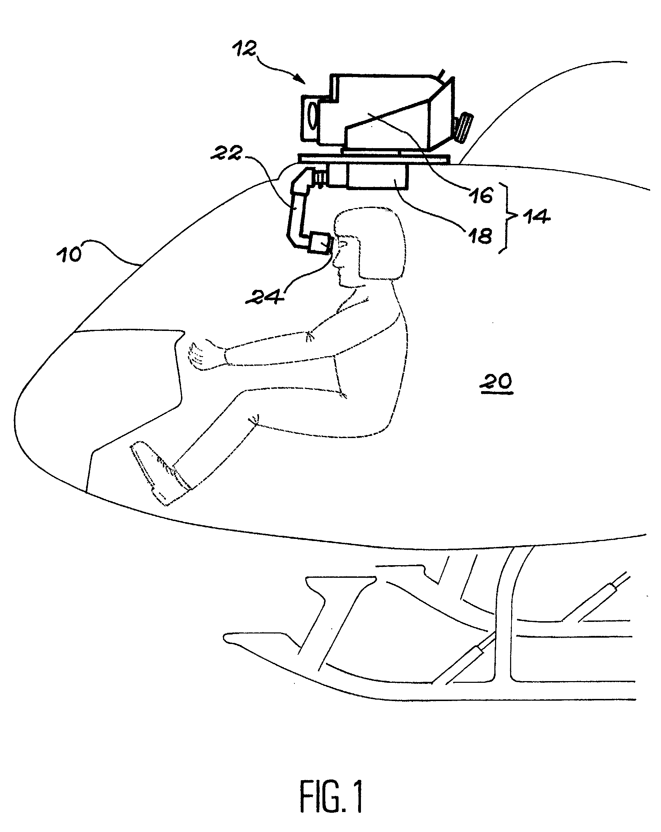

Sur la figure 1, on a représenté schématiquement la partie avant d'un hélicoptère. Celui-ci comporte une cellule 10 dont le toit supporte une tête de visée 12 d'une conduite de tir (non représentée).

La tête de visée 12 comprend un boîtier 14 dont une partie principale 16 est située au-dessus du toit de la cellule 10, à l'extérieur de l'hélicoptère. Une autre partie 18 du boîtier 14 est située à l'intérieur de la cabine de pilotage 20 de l'hélicoptère. Un bras porte oculaires 22 terminé par un oculaire 24 est monté sur la partie 18 du boîtier 14, pour permettre à un observateur placé dans la cabine 20 d'utiliser la tête de visée 12.

Les parties 16 et 18 du boîtier 14 et le bras porte oculaire 22 servent à loger différents composants optiques (non représentés) permettant à un observateur regardant par l'oculaire 24 d'observer une scène.

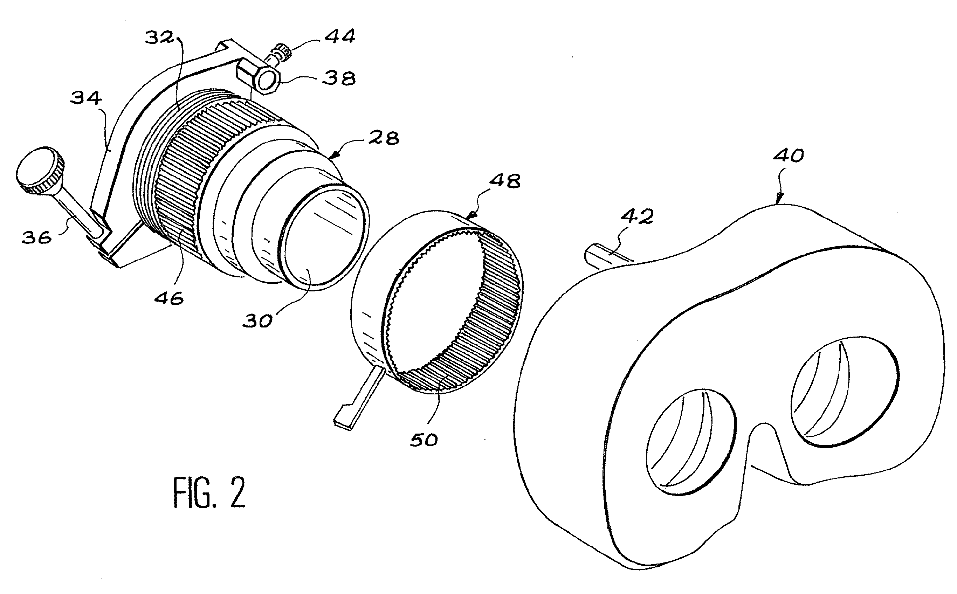

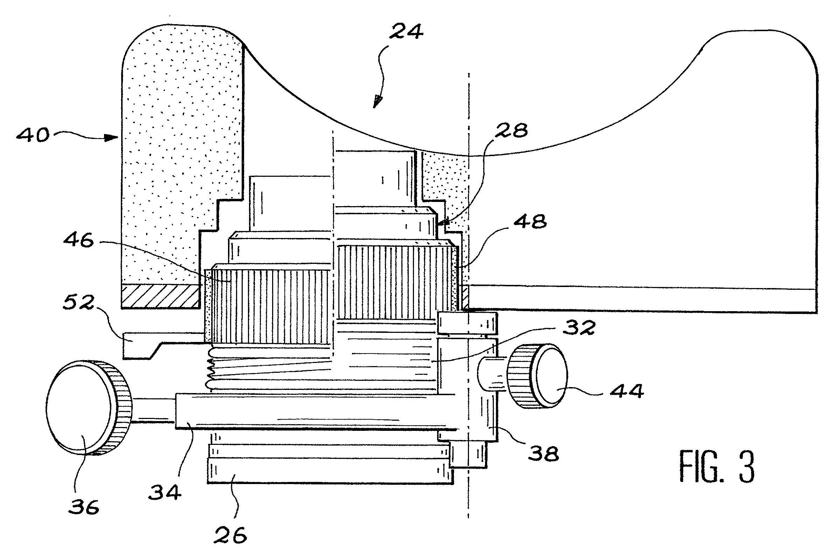

Comme l'illustrent les figures 2 et 3, l'oculaire 24 comprend une partie fixe 26 munie d'un filetage à grand pas (non représenté) sur sa surface extérieure.

Une bague de réglage dioptrique 28 est montée autour de la partie fixe 26. Plus précisément, la bague de réglage 28 présente un filetage intérieur (non représenté) complémentaire du filetage extérieur de la partie fixe 26, de façon à être en prise sur celle-ci par l'intermédiaire desdits filetages.

Grâce à cet agencement connu, l'oculaire 24 peut être réglé à la vue de l'observateur par une rotation de la bague de réglage 28. En effet, cette rotation a pour effet de déplacer la bague de réglage 28 parallèlement à son axe, par rapport à la partie fixe de l'oculaire 24. Le déplacement axial de la bague de réglage 28 se traduit par un déplacement correspondant d'un jeu de lentilles 30 porté par ladite bague, qui assure le réglage souhaité.

Comme le montrent les figures 2 et 3, l'oculaire 24 comprend également un soufflet d'étanchéité 32. Ce soufflet 32 assure la protection du filetage extérieur de la partie fixe 26. A cet effet, il entoure la portion de ce filetage qui est comprise entre ladite partie fixe et un bord arrière de la bague de réglage 28. Ici comme dans l'ensemble du texte, les termes "avant" et "arrière" désignent respectivement des parties proches ou, au contraire, éloignées de l'oeil de l'observateur.

A l'arrière du soufflet d'étanchéité 32, un support 34 en forme de collier est fixé sur la partie fixe 26 de l'oculaire 24. La fixation peut notamment être assurée par serrage, au moyen d'une vis 36.

Dans le mode de réalisation représenté sur les figures 2 et 3, le support 34 est muni d'une partie tubulaire 38, de section hexagonale, orientée parallèlement à l'axe optique de l'oculaire 24 et sa positionest adaptée à l'utilisation oeil droit ou oeil gauche de l'appui front, suivant l'oeil directeur de l'observateur.

L'oculaire 24 est prévu pour être équipé d'un appui front commun 40, démontable et réalisé en mousse. L'appui front 40 est fixé sur le support 34, sur le côté avant des oculaires 24, de façon à entourer et à recouvrir vers l'avant la bague de réglage 28, en laissant dégagée l'extrémité de l'oculaire 24.

Pour permettre son montage sur le support 34, l'appui front 40 comprend une tige 42, comportant deux plats correspondant à la vis de fixation 44. Lorsque l'appui front est monté, la tige 42 est reçue dans la partie tubulaire 38. Le blocage de la tige 42 est assuré par une vis 44. Plus précisément, la vis 44 est vissée dans un trou taraudé traversant la paroi de la partie tubulaire 38 et son extrémité vient en appui contre la surface extérieure de la tige 42.

Dans le mode de réalisation illustré sur les figures 2 et 3, l'oculaire 24 est un oculaire existant. La bague de réglage 28 présente alors, sur sa surface périphérique extérieure, des cannelures 46.

Dans ce cas, on monte une bague de commande 48 autour de la bague de réglage 28. La bague de commande 48 comporte également, sur sa surface périphérique intérieure, des cannelures 50 complémentaires des cannelures 46 formées sur la bague de réglage 28. Ainsi, la bague de commande 48 est solidaire en rotation de la bague de réglage 28.

Conformément à l'invention, la bague de commande 48 porte un levier 52 de commande de rotation. Plus précisément, le levier 52 de commande de rotation est solidaire de la bague de commande 48 et fait saillie radialement vers l'extérieur entre le soufflet d'étanchéité 32 et l'appui front 40, comme le montre en particulier la figure 3.

De façon plus précise, le levier 52 de commande de rotation est fixé à proximité du bord arrière de la bague de commande 48, pour tenir compte du fait que, dans une position extrême de la bague de réglage 28 illustrée à droite sur la figure 3, la bague de réglage et la bague de commande sont presque totalement encastrées dans l'appui front 40.

De surcroît, le montage de la bague de commande 48 sur la bague de réglage 28 est réalisé différemment selon que l'oculaire concerne l'oeil droit ou l'oeil gauche de l'observateur. En effet, le levier de commande 52 doit être toujours accessible vers l'extérieur du système monoculaire, quel que soit le réglage effectué, en tenant compte du fait que la course de réglage de chacun des oculaires 24 est d'un demi tour.

Cet agencement permet à un utilisateur de commander une rotation de la bague de réglage 28 en agissant sur le levier 52 de commande de rotation. L'utilisateur peut ainsi effectuer un réglage dioptrique de l'oculaire 24 sans avoir à enlever l'appui front 40 et sans risquer d'endommager le soufflet d'étanchéité 32, même s'il est équipé de gants comme c'est généralement le cas lorsque l'hélicoptère est en vol.

Le mode de réalisation qui vient d'être décrit en se référant aux figures 2 et 3 concerne le cas d'un oculaire existant dont la bague de réglage 28 comporte des cannelures 46 sur sa surface périphérique extérieure. Toutefois, l'invention peut aussi s'appliquer à un oculaire de construction nouvelle.

Dans ce cas et selon un deuxième mode de réalisation de l'invention, non représenté sur les figures, le levier de commande 52 peut être fixé directement sur la bague de réglage dioptrique 28. A cet effet, la bague de réglage 28 peut alors être équipée de deux trous taraudés (correspondant respectivement aux positions oeil droit et oeil gauche). Dans ce cas, le levier de commande 52 est terminé par une tige filetée prévue pour être vissée dans l'un des trous taraudés de la bague de réglage 28.

## Revendications

1. Oculaire (24) de tête de visée de giravion, comprenant une partie fixe (26) munie d'un filetage, une bague (28) de réglage dioptrique en prise sur ledit filetage, un soufflet d'étanchéité (32) recouvrant le filetage entre un bord arrière de la bague (28) et ladite partie fixe (26), et un appui front (40) apte à recouvrir une partie avant de l'oculaire (24), **caractérisé en ce que** la bague (28) de réglage dioptrique porte un levier (52) de commande de rotation, qui fait saillie radialement vers l'extérieur entre le soufflet d'étanchéité (32) et l'appui front (40).

2. Oculaire selon la revendication 1, dans lequel la bague (28) de réglage dioptrique comporte des cannelures extérieures (46) et le levier de commande (52) est fixé sur une bague de commande (48) qui entoure la bague de réglage (28) et comporte des cannelures intérieures (50) en prise sur les cannelures extérieures (46) de ladite bague de réglage (28).

3. Oculaire selon la revendication 1, dans lequel le levier de commande (52) est fixé directement sur la bague de réglage dioptrique (28).
